# EUROPÄISCHE PATENTSCHRIFT

(11) **EP 1 151 841 B1**
(45) Veröffentlichungstag und Bekanntmachung des Hinweises auf die Patenterteilung: **26.01.2005**
(21) Anmeldenummer: 01103636.5
(22) Anmeldetag: 22.02.2001
(51) Int. Cl.: B29C 45/14, B60R 13/02, B60R 21/20, B29C 44/14

(54) **Belederungsteil für eine Fahrzeuginnenraumverkleidung und Verfahren zur Herstellung derselben**
Interior lether liner for a vehicle and a method for manufacturing the same
Revêtement de cuir pour l'intérieur d'un véhicule et procédé de sa fabrication

(30) Priorität: 06.03.2000 DE 10010862
(43) Veröffentlichungstag der Anmeldung: 07.11.2001
(73) Patentinhaber: TRW Automotive Safety Systems GmbH, 63743 Aschaffenburg (DE)
(72) Erfinder: Hehl, Achim, 63768 Hösbach (DE)
(74) Vertreter: Kitzhofer, Thomas, Dipl.-Ing.

(56) Entgegenhaltungen:
- EP-A- 0 337 183
- EP-A- 0 872 383
- DE-A- 4 343 240
- DE-A- 4 433 455
- DE-U- 29 622 843
- US-A- 5 650 115

## Beschreibung

Die Erfindung betrifft ein Belederungsteil für eine Innenraumverkleidung eines Kraftfahrzeugs sowie ein Verfahren zur Herstellung eines solchen Belederungsteils gemäß dem Oberbegriff des Anspruchs 1 bzw. den Oberbegriffen der Ansprüche 8 und 9. Darüber hinaus betrifft die Erfindung eine Fahrzeuginnenraumverkleidung mit einem erfindungsgemäßen Belederungsteil und ein Verfahren zur Herstellung einer solchen Fahzeuginnenraumverkleidung gemäß dem Oberbegriff des Anspruch 7 bzw. dem Oberbegriff des Anspruchs 13.

Mit einer Lederoberfläche versehene Fahrzeuginnenraumverkleidungen sind auf Grund der edlen Optik und des ansprechenden Griffgefühls sehr beliebt. Vor allem belederte Lenkräder sind gefragt, aber auch mit Leder überzogene Gassackabdeckungen, Armaturenbretter und Türverkleidungen sind bekannt. In einem bekannten Verfahren wird zunächst ein die entsprechende Form aufweisendes Kunststoffteil hergestellt, das dann mit entsprechend ausgestanzten und zusammengenähten Lederbezügen von Hand beklebt wird. Dieses Verfahren ist zum einen sehr aufwendig, und zum anderen kann die Optik der Lederoberfläche durch eine Verflachung der Narbung des Leders bei diesem Aufziehprozess leiden.

Eine erhebliche Vereinfachung der Herstellung einer solchen belederten Fahrzeuginnenraumverkleidung ergibt sich durch die Verwendung eines Hinterspritzverfahrens: Bei diesem Verfahren wird das Material, das die spätere Oberfläche bilden soll, in eine Spritzgußform eingelegt und mit der Spritzgußmasse hinterspritzt. Wegen der relativ große Dicke des Leders und den starken Krümmungen, die in Bauteilen zur Fahrzeuginnenraumverkleidung verwirklicht werden müssen, sowie der geringen Dehnfähigkeit von Leder muß das Lederstück vor dem Einlegen in die Spritzgußform vorgeformt werden. Die US-A 5 650 115 beschreibt ein Verfahren, bei dem ein Lederstück vor dem Einlegen in eine Spritzgußform durch eine Wärmebehandlung vorgeformt wird. Da die Verformung des Leders nur durch Wärme geschieht, ist die Formgebungsmöglichkeit eingeschränkt. Darüber hinaus ist aus der DE 43 43 240 A1 ein Verfahren bekannt, bei dem ein Leder hinterspritzt wird, damit ein formstabiles Zwischenprodukt entsteht. Anschließend wird auf den gespritzten Kunststoff eine Folie aufgebracht, und das Zwischenprodukt wird in einer Gußform rückseitig mit einem Trägerkörper versehen. Das Zwischenprodukt und der Träger sind formschlüssig verbunden und können aus Recyclinggründen wegen der Kunststofffolie bei der Verschrottung leicht voneinander getrennt werden, denn sie gehen keine Bindung ein.

Ein Belederungsteil und ein Verfahren zu dessen Herstellung der eingangs genannten Art sind aus der DE 43 43 240 A1 bekannt. Das Belederungsteil umfaßt ein Lederstück und eine mit dem Lederstück verbundene Zwischenschicht. Auf das Lederstück ist eine Zwischenschicht durch Vliespressen oder Kaschieren aufgebracht, so daß es eine gekrümmte Form bekommt. Durch Zwischenlegen einer Kunststoffolie wird eine strikte Trennung zwischen der Zwischenschicht und einem Trägerteil für das Belederungsteil erreicht.

Die DE 296 22 843 U1 zeigt ein Innenausstattungsteil mit einer Zwischenschicht als Gewirke.

Aus der EP 0 872 383 A2 ist eine Fahrzeuginnenausstattungsteil bekannt, das eine Leder-Dekorschicht mit einer darauf geklebten Zwischenschicht aus z.B. PET/PP-Vlies, wobei dieses Zwischenprodukt in ein Werkzeug eingelegt und mit einer vorgewärmten Naturfaser-Thermoplast-Matte in einem einzigen Arbeitsgang hinterpreßt wird.

Aufgabe der Erfindung ist es, ein einfach zu verarbeitendes, gut zwischenlagerfahiges Belederungsteil für eine Fahrzeuginnenraumverkleidung zu schaffen.

Dies wird bei einem Belederungsteil der eingangs genennten Art durch die kennzeichnenden Merkmale des Anspruchs 1 erreicht. Da die Formstabilität des Belederungsteils von der ausgehärteten Masse bestimmt ist, lassen sich auch komplizierte Formen mit starken Krümmungen verwirklichen, so daß es auch für die Herstellung komplizierter Formen in einem Hinterspritzverfahren geeignet ist. Das Belederungsteil ist so eigensteif, daß es trotz seines Eigengewichts seine Form behält, es ist aber nach wie vor flexibel. Das Belederungsteil allein kann deshalb nicht ins Fahrzeug eingebaut werden, es fehlt das stabile Trägerteil, mit dem zusammen erst die Innenraumverkleidung gebildet ist. Vorteilhaft ist, daß die Herstellung und Verformung des Belederungsteils in eine gekrümmte Form vor der Fertigung der Innenraumverkleidung erfolgen kann, da das Beledrerungsteil aufgrund seiner hohen Formstabilität gut zwischengelagert werden kann.

Die Zwischenschicht kann zum einen als Trägermaterial für die aushärtbare Masse dienen und kann zum anderen eine Zusatzkaschierung, zum Beispiel zur thermischen Isolierung, bilden. Bei der nachfolgenden Fertigung einer Fahrzeuginnenraumverkleidung durch Hinterspritzen eines erfindungsgemäßen Belederungsteils mit einem Kunststoffträgerstück aus einer Spritzgußmasse kann die Zwischenschicht zur Verbesserung der Haftung zwischen dem Lederstück und dem Kunststoffträger beitragen. Das Belederungsteil weist eine Vorderwand und eine Seitenwand auf, die zur Vorderwand abgewinkelt verläuft, und die Vorder- und die Seitenwand sind innenseitig wenigstens teilweise mit der aushärtbaren Masse beschichtet. Die Seitenwand weist einen freien Außenrand auf, der nicht mit aushärtbarer Masse beschichtet ist. Dieser freie Außenrand kann bei der Fertigstellung der Fahrzeuginnenraumverkleidung

Die Zwischenschicht ist bevorzugt ein Vlies oder ein Gewebe, das fähig ist, eine aushärtbare Masse aufzunehmen, und das so biegsam ist, daß es sich der gewünschten Kontur gut anpassen läßt.

Bevorzugt wird als aushärtende Masse ein Klebstoff verwendet. Dies hat den Vorteil, daß der Klebstoff auch zur Verbindung des Lederstücks mit der Zwischenschicht eingesetzt werden kann und auf diese Weise nur ein Material eingesetzt werden muß.

In einer Erweiterung der Erfindung ist das Lederstück mit der Zwischenschicht über eine Schaumschicht verbunden, die der Verbesserung der Haptik sowie der thermischen Isolierung dient. Dies ist insbesondere bei Lenkrädern vorteilhaft. um die Außenkanten des Kunststoffrägerstücks gebogen und dort zum Beispiel verklebt werden, da er nach wie vor biegsam ist.]

Besonders vorteilhaft einsetzbar sind solche Belederungsteile für Fahrzeuginnenraumverkleidungen, insbesondere für eine Abdeckung eines Gassackmoduls, wobei mit dem Belederungsteil ein Trägerstück durch Hinterspritzen verbunden ist. Das erfindungsgemäße Belederungsteil eignet sich zum Hinterspritzen mit einem Kunststoffmaterial in einer Spritzgußform, da es genau entsprechend dieser Form vorgeformt werden kann und in der Form leicht positionierbar ist.

Aufgabe der Erfindung ist es außerdem, ein verbessertes Verfahren zur Herstellung eines Belederungsteils für eine Fahrzeuginnenraumverkleidung vorzustellen. Hierzu umfaßt das Verfahren die in Anspruch 8 angegebenen Schritte. Die auf die Zwischenschicht aufgebrachte aushärtbare Masse dringt vorzugsweise in diese ein, durchtränkt sie gegebenenfalls und kann sogar die Zwischenschicht mit dem Lederstück verbinden. Anschließend wird das Belederungsteil vor dem Aushärten der aushärtbaren Masse in eine Form eingebracht und in die gewünschte Gestalt gebracht und in dieser Form bis zum ganzen oder teilweisen Aushärten der aushärtbaren Masse gehalten. Nach der Entnahme aus der Form gibt die aushärtbare Masse dem Belederungsteil eine solche Eigensteifigkeit, daß es die ihm verliehene, gekrümmte Gestalt beibehält und bis zur weiteren Verarbeitung, z.B. zu einer Fahrzeuginnenraumverkleidung, gelagert werden kann. Die Verbindung des Lederstücks mit der Zwischenschicht kann in einem Arbeitsgang mit dem Aufbringen der aushärtbaren Masse erfolgen, wodurch der Herstellungsprozeß vereinfacht wird.

Ein alternatives Verfahren zur Herstellung eines Belederungsteils ist in Anspruch 9, angegeben. In diesem Fall wird die Haftung zwischen dem Lederstück und der Zwischenschicht verbessert, wobei auch hier die Zwischenschicht von der aushärtbaren Masse durchtränkt werden kann.

Zusätzlich kann vor dem Verformen des Belederungsteils eine aushärtbare Masse auf die Zwischenschicht aufgebracht werden, um die Gesamtmenge der aushärtbaren Masse zu erhöhen und die Formstabilität und Eigensteifigkeit des fertigen Belederungsteils zu verbessern.

In einer bevorzugten Ausführungsform geschieht die Verformung des Belederungsteils dadurch, daß das Belederungsteil vor dem Aushärten der Masse über eine Positivform gespannt wird. Die Masse wird ausgehärtet, solange sich das Belederungsteil über der Form befindet.

In einer alternativen Ausführungsform erfolgt die Verformung des Belederungsteils dadurch, daß das Belederungsteil vor dem Aushärten der Masse z.B. durch einen Stempel in eine Negativform gedrückt wird. Dies bietet den Vorteil, daß durch eine entsprechende Gestaltung der inneren Oberfläche der Negativform dem Leder eine Prägung verliehen werden kann. Auch in diesem Fall wird das Belederungsteil erst nach dem vollständigen oder teilweisen Aushärten der Masse aus der Form entnommen.

Jede der zur Fertigung des Belederungsteils eingesetzte aushärtbare Masse ist von einer Spritzgußmasse, wie sie zur Herstellung des Kunststoffträgerstücks verwendet wird, verschieden. Bevorzugt ist die aushärtbare Masse bei Zimmertemperatur flüssig, um sich ohne großen Aufwand verarbeiten zu lassen.

Vorzugsweise ist die aushärtbare Masse ein Klebstoff. Auf diesem Weg ist die Verwendung eines einzigen Materials ausreichend, um das Lederstück, die Zwischenschicht und eine eventuelle Schaumschicht zu verbinden und der Belederung die notwendige Eigensteifigkeit zu geben, was die Herstellung des Belederungsteils vereinfacht.

Alternativ können auch verschiedene aushärtbare Massen eingesetzt werden, um die Zwischenschicht mit dem Lederstück zu verkleben und um dem Belederungsteil die gewünschte Eigensteifigkeit zu verleihen.

Ein oben beschriebenes Belederungsteil läßt sich zur Herstellung einer erfindungsgemäßen Fahrzeuginnenraumverkleidung, insbesondere einer Abdeckung eines Gassackmoduls, einsetzen. Dazu wird das vorgeformte Belederungsteil in eine Spritzgußform eingelegt, die Innenseite des Belederungsteils mit einem Kunststoff zur Bildung eines Trägerstücks hinterspritzt und die Fahrzeuginnenraumverkleidung aus der Spritzgußform entnommen. Aufgrund der variablen Formbarkeit sowie der hohen Eigensteifigkeit läßt sich das Belederungsteil auch an stark gekrümmte und komplizierte Spritzgußformen gut anpassen und mit geringem Aufwand hinterspritzen. Das Belederungsteil bildet sozusagen den "Lederbezug" der vom Fahrzeuginnenraum sichtbaren Teile der Fahrzeuginnenraumverkleidung.

Weitere Merkmale und Vorteile der Erfindung ergeben sich aus der nachfolgenden Beschreibung und den beigefügten Zeichnungen. In diesen zeigen:
- Figur 1 eine Teilansicht eines erfindungsgemäßen Belederungsteils im Schnitt;
- Figur 2 einen vergrößerten Schnitt durch das Belederungsteil nach Figur 1;
- Figur 3 einen vergrößerten Schnitt durch ein erfindungsgemäßes Belederungsteil gemäß einer zweiten Ausführungsform;
- Figur 4 einen vergrößerten Schnitt durch ein erfindungsgemäßes Belederungsteil gemäß einer weiteren Ausführungsform;
- Figur 5 eine Teilansicht einer erfindungsgemäßen Fahrzeuginnenraumverkleidung im Schnitt;

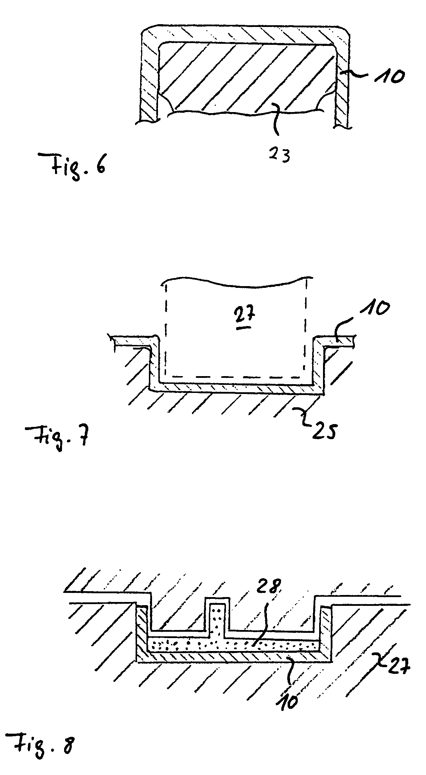

- Figur 6 einen Schnitt durch ein auf eine Positivform gespanntes Belederungsteil;
- Figur 7 einen Schnitt durch ein in eine Negativform gedrücktes Belederungsteil; und
- Figur 8 eine schematische Schnittansicht einer Spritzgußform mit einer Fahrzeuginnenraumverkleidung.

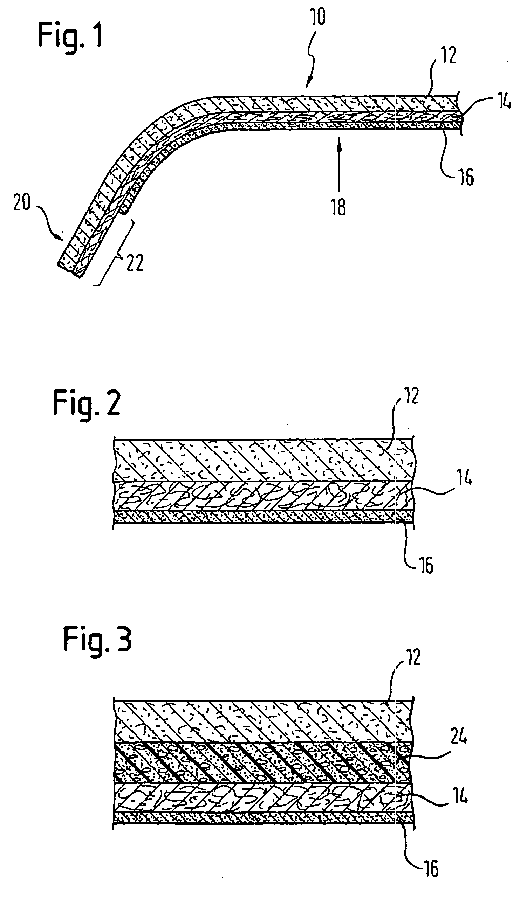

Figur 1 zeigt ein erfindungsgemäßes fertiges Belederungsteil 10, wie es für eine Fahrzeuginnenraumverkleidung, zum Beispiel eine Abdeckkappe eines Fahrer-Gassack-Moduls, eingesetzt werden kann. Das Belederungsteil 10 weist ein die Außenoberfläche der Verkleidung bildendes Lederstück 12 auf, das mit einer darunterliegenden Zwischenschicht 14 verbunden ist. Auf die Zwischenschicht 14 ist eine aushärtbare Masse 16 aufgebracht, die im in Figur 1 gezeigten fertigen Belederungsteil 10 ausgehärtet ist und die das Belederungsteil 10 in einer gekrümmten Form hält.

Das dargestellte Belederungsteil 10 weist eine Vorderwand 18 und eine Seitenwand 20 auf, wobei die Seitenwand bezüglich der Vorderwand abgewinkelt verläuft. Die Seitenwand 20 ist nur teilweise mit der aushärtbaren Masse 16 beschichtet, so daß ein freier Außenrand 22 entsteht. Dieser Außenrand kann entweder, wie in Figur 1 dargestellt, aus dem Lederstück 12 und der Zwischenschicht 14 bestehen oder nur aus dem Lederstück 12. Bei der Fertigstellung der Fahrzeuginnenraumverkleidung 26 wird dieser freie Außenrand 22, der die ursprüngliche Biegsamkeit des Leders aufweist, um ein Trägerstück 28 herumgebogen und an diesem fixiert werden, wie weiter unten ausgeführt ist.

Die Herstellung des Belederungsteils 10 wird im folgenden beschrieben. In einem ersten Verfahren werden das Lederstück 12 und die Zwischenschicht 14 aufeinandergebracht und mit einer aushärtbaren Masse 16 beschichtet (siehe die in Fig. 2 dargestellte Ausführungsform). Die aushärtbare Masse 16 durchdringt dabei die Zwischenschicht 14, durchtränkt diese und verbindet das Lederstück 12 mit der Zwischenschicht 14. Vorzugsweise wird als aushärtbare Masse 16 ein Klebstoff eingesetzt, der sowohl das Lederstück 12 mit der Zwischenschicht 14 verkleben kann, als auch nach dem Aushärten eine genügend hohe Eigensteifigkeit zeigt, damit das Belederungsteil 10 seine gekrümmte Form beibehält. Die aushärtbare Masse ist bevorzugt bei Zimmertemperatur flüssig und ist von der Spritzgußmasse verschieden, aus der das Trägerstück 28 bevorzugt gebildet ist.

Als Zwischenschicht 14 wird vorzugsweise ein Gewebe oder ein Vlies mit einer relativ geringen Dicke verwendet, das weich genug ist, um sich der gewünschten Form anzupassen, und das sich mit der verwendeten aushärtbaren Masse 16 tränken läßt.

Anschließend wird die Schichtfolge aus Lederstück 12 und Zwischenstück 14 mit der aufgetragenen aushärtbaren Masse 16 entweder über eine Positivform 23 gespannt, deren Form der gewünschten Fahrzeuginnenraumverkleidung entspricht, oder in eine entsprechende Negativform 25 gedrückt. Das Andrücken kann mit einem Stempel 27 erfolgen. Sowohl der Stempel 27 als auch die Negativform 25 können Prägungen aufweisen, um die Oberfläche des Lederstücks 12 oder der Innenseite des Belederungsteils 10 eine gewünschte Prägung, zum Beispiel in Form einer Narbung zur Verbesserung der Optik der Lederoberfläche zu verleihen.

Das Belederungsteil 10 wird in der Form belassen, bis die aushärtbare Masse 16 ganz oder teilweise ausgehärtet ist.

Nach der Entnahme aus der Form kann das Belederungsteil 10 dann bis zu seiner Weiterverarbeitung gelagert werden.

In einem alternativen Verfahren wird das Lederstück 12 zunächst mit einer Schaumschicht 24 verbunden (siehe die in Fig. 3 gezeigte Ausführungsform), die z.B. zur Verbesserung der Haptik der Fahrzeuginnenraumverkleidung dient. Die Verbindung des Lederstücks 12 mit der Schaumschicht 24 kann entweder mit der gleichen aushärtbaren Masse 16, die zur Formgebung des Belederungsteils 10 verwendet wird, oder mit einem anderen geeigneten Klebstoff erfolgen. Die Schaumschicht 24 wird mit der Zwischenschicht 14 verbunden, welche wiederum mit einer aushärtbaren Masse 16 beschichtet wird. Das restliche Verfahren läuft ab wie oben beschrieben.

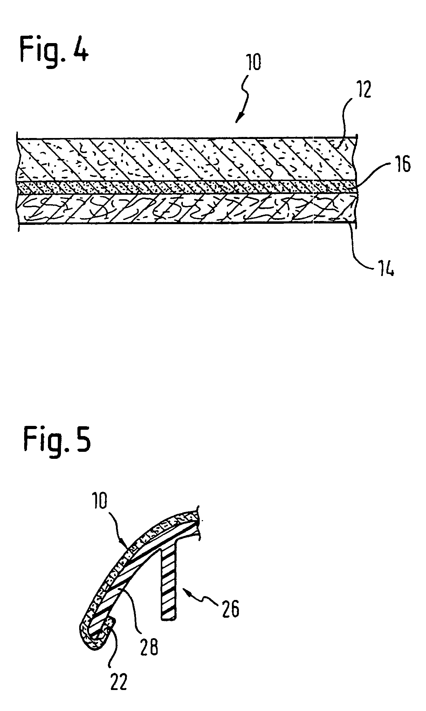

Ein weiteres Verfahren sieht vor, daß die aushärtbare Masse 16 direkt auf das Lederstück 12 aufgebracht und anschließend die Zwischenschicht 14 auf die aushärtbare Masse 16 aufgebracht wird, wie die in Figur 4 dargestellte Ausführungsform zeigt. Auch in diesem Fall durchtränkt die aushärtbare Masse 16 die Zwischenschicht 14.

In diesem Fall dient die aushärtbare Masse 16 auch der Verbindung zwischen dem Lederstück 12 und der Zwischenschicht 14. Zusätzlich kann eine weitere Schicht der gleichen oder einer anderen aushärtbaren Masse 16 auf die Zwischenschicht 14 aufgebracht werden. Das Verformen des Belederungsteils 10 erfolgt wie oben beschrieben.

Das nach dem Aushärten der Masse 16 geformte Belederungsteil 10 wird nun zur Fertigung einer Fahrzeuginnenraumverkleidung 26 in eine Spritzgußform 27 eingelegt, in der es auf bekannte Weise durch ein Vakuum fixiert werden kann, und wird in einem bekannten Verfahren zur Bildung des Kunststoffträgerstücks 28 mit einer Spritzgußmasse hinterspritzt, so daß die Fahrzeuginnenraumverkleidung 26 aus dem Belederungsteil 10 und dem Trägerstück 28 gebildet wird. Nach der Entnahme des hinterspritzten Belederungsteils 10 kann der freie Außenrand 22 um den freien Rand des Kunststoffträgerstücks 28 per Hand herumgebogen und an diesen innenseitig angeklebt werden.

Ein 90°-Umbug des freien Außenrandes läßt sich in einem Spritzgußwerkzeug verwirklichen, ein 180°-Umbug, wie in Figur 5 gezeigt, muß aber nachträglich von Hand erfolgen.

Die Verwendung eines Vlieses als Zwischenschicht 14 sorgt auch für eine gute Verbindung des Trägerstücks 28 mit dem Belederungsteil 10 beim Hinterspritzen.

## Patentansprüche

1. Belederungsteil für eine Fahrzeuginnenraumverkleidung, mit einem Lederstück (12) und einer mit dem Lederstück (12) verbundenen Zwischenschicht (14), wobei auf die Zwischenschicht (14) oder auf das Lederstück (12) eine aushärtbare Masse (16) aufgebracht ist, wobei das Belederungsteil (10) eine Vorderwand (18) und eine Seitenwand (20) aufweist, die zur Vorderwand (18) abgewinkelt verläuft, und wobei Vorder- und Seitenwand innenseitig wenigstens teilweise mit der aushärtbaren Masse (16) beschichtet sind, **dadurch gekennzeichnet, daß** die aushärtbare Masse (16) nach dem Aushärten dem Belederungsteil (10) eine solche Eigensteifigkeit gibt, daß es eine gekrümmte Form beibehält, und daß die Seitenwand (20) einen freien Außenrand (22) aufweist, der nicht mit aushärtbarer Masse (16) beschichtet ist.

2. Belederungsteil nach Anspruch 1, **dadurch gekennzeichnet, daß** die Zwischenschicht (14) ein Vlies ist.

3. Belederungsteil nach Anspruch 1, **dadurch gekennzeichnet, daß** die Zwischenschicht (14) ein Gewebe ist.

4. Belederungsteil nach einem der vorgehenden Ansprüche, **dadurch gekennzeichnet, daß** die aushärtbare Masse (16) ein Klebstoff ist.

5. Belederungsteil nach Anspruch 4, **dadurch gekennzeichnet, daß** der Klebstoff (16) auch das Lederstück (12) mit der Zwischenschicht (14) verbindet.

6. Belederungsteil nach einem der vorhergehenden Ansprüche, **dadurch gekennzeichnet, daß** das Lederstück (12) mit der Zwischenschicht (14) über eine Schaumschicht (24) verbunden ist.

7. Fahrzeuginnenraumverkleidung, insbesondere Abdeckung für ein Gassackmodul, mit einem Belederungsteil (10) nach einem der vorhergehenden Ansprüche und einem mit diesem verbundenen Trägerstück (28), wobei das Belederungsteil (10) hinterspritzt ist und der hinterspritzte Teil das Trägerstück (28) bildet.

8. Verfahren zur Herstellung eines Belederungsteils nach einem der Ansprüche 1 bis 6, das die folgenden Schritte umfaßt: Bildung einer Schichtfolge aus Lederstück (12) und Zwischenschicht (14), Verformen des Belederungsteils (10) in eine gekrümmte, insbesondere in eine einer Fahrzeuginnenraumverkleidung (26) entsprechende Gestalt mit Hilfe einer Form (23, 25), und Trennen des Belederungsteils (10) von der Form (23, 25), **gekennzeichnet durch** folgende Schritte: Beschichten der Zwischenschicht (14) mit einer aushärtbaren Masse (16), Vorsehen eines von aushärtbarer Masse (16) freien Außenrandes (22) einer Seitenwand (20), die im verformten Zustand des Belederungsteils (10) zu einer Vorderwand (18) des Belederungsteils (10) abgewinkelt verläuft, und Aushärten der aushärtbaren Masse (16).

9. Verfahren zur Herstellung eines Belederungsteils nach einem der Ansprüche 1 bis 6, das die folgenden Schritte umfaßt: Aufbringen der Zwischenschicht (14) auf das Lederstück (12), Verformen des Belederungsteils (10) in eine gekrümmte, insbesondere in eine einer Fahrzeuginnenraumverkleidung (26) entsprechende Gestalt mit Hilfe einer Form (23, 25), und Trennen des Belederungsteils von der Form (23,25), **gekennzeichnet durch** folgende Schritte: Beschichten des Lederstücks (12) mit einer aushärtbaren Masse (16), Vorsehen eines von aushärtbarer Masse (16) freien Außenrandes (22) einer Seitenwand (20), die im verformten Zustand des Belederungsteils (10) zu einer Vorderwand (18) des Belederungsteils (10) abgewinkelt verläuft, und Aushärten der aushärtbaren Masse (16).

10. Verfahren nach Anspruch 9, **dadurch gekennzeichnet, daß** vor der Verformung des Belederungsteils (10) eine aushärtbare Masse (16) auf die Zwischenschicht (14) aufgebracht wird.

11. Verfahren nach einem der Ansprüche 8 bis 10, **dadurch gekennzeichnet, daß** die Verformung des Belederungsteils (10) dadurch erfolgt, daß das Belederungsteil (10) vor dem Aushärten der Masse (16) über eine Positivform (23) gespannt wird.

12. Verfahren nach einem der Ansprüche 8 bis 10, **dadurch gekennzeichnet, daß** die Verformung des Belederungsteils (10) dadurch erfolgt, daß das Belederungsteil (10) vor dem Aushärten der Masse (16) in eine Negativform (25) gedrückt wird.

13. Verfahren zur Herstellung einer Fahrzeuginnenraumverkleidung, insbesondere einer Abdeckung eines Gassackmoduls, mit einem nach einem Verfahren nach den Ansprüchen 8 bis 12 hergestellten Belederungsteil (10), mit den folgenden Schritten: Einlegen des Belederungsteils (10) in eine Spritzgußform (27), Hinterspritzen der Innenseite des Belederungsteils (10) mit einem Kunststoff unter Bildung eines Trägerstücks (28) und Entnahme der Fahrzeuginnenraumverkleidung (26) aus der Spritzgußform (27).

## Claims

1. A leather covering piece for a vehicle interior lining, comprising a leather piece (12) and an intermediate layer (14) connected with the leather piece (12), a hardenable mass (16) being applied on the intermediate layer (14) or on the leather piece (12), the leather covering piece (10) having a front wall (18) and a side wall (20) which extends at an angle in relation to the front wall (18), and the inner faces of the front and side walls being coated at least partially with the hardenable mass (16), **characterized in that** the hardenable mass (16) after hardening gives the leather covering piece (10) such an inherent rigidity that it maintains a curved shape, and that the side wall (20) has a free outer edge (22) which is not coated with hardenable mass (16).

2. The leather covering piece according to Claim 1, **characterized in that** the intermediate layer (14) is a fleece.

3. The leather covering piece according to Claim 1, **characterized in that** the intermediate layer (14) is a fabric.

4. The leather covering piece according to any of the preceding claims, **characterized in that** the hardenable mass (16) is an adhesive.

5. The leather covering piece according to Claim 4, **characterized in that** the adhesive (16) also connects the leather piece (12) with the intermediate layer (14).

6. The leather covering piece according to any of the preceding claims, **characterized in that** the leather piece (12) is connected with the intermediate layer (14) via a foam layer (24).

7. A vehicle interior lining, in particular a cover for a gas bag module, comprising a leather covering piece (10) according to any of the preceding claims and comprising a support piece (28) connected therewith, the leather covering piece (10) having an injection-molded backing and the part provided with the injection-molded backing constituting the support piece (28).

8. A method of producing a leather covering piece according to any of Claims 1 to 6, comprising the following steps: formation of a layer sequence of the leather piece (12) and the intermediate layer (14), deformation of the leather covering piece (10) into a curved shape, in particular into a shape corresponding to a vehicle interior lining (26), with the aid of a mold (23, 25), and separating the leather covering piece (10) from the mold (23, 25), **characterized by** the following steps: coating the intermediate layer (14) with a hardenable mass (16), providing an outer edge (22), free of hardenable mass (16), of a side wall (20) which in the deformed condition of the leather covering piece (10) extends at an angle in relation to a front wall (18) of the leather covering piece (10), and hardening of the hardenable mass (16).

9. A method of producing a leather covering piece according to any of Claims 1 to 6, comprising the following steps: application of the intermediate layer (14) onto the leather piece (12), deformation of the leather covering piece (10) into a curved shape, in particular into a shape corresponding to a vehicle interior lining (26), with the aid of a mold (23, 25), and separating the leather covering piece (10) from the mold (23, 25), **characterized by** the following steps: coating the leather piece (12) with a hardenable mass (16), providing an outer edge (22), free of hardenable mass (16), of a side wall (20) which in the deformed condition of the leather covering piece (10) extends at an angle in relation to a front wall (18) of the leather covering piece (10), and hardening of the hardenable mass (16).

10. The method according to Claim 9, **characterized in that** prior to the deformation of the leather covering piece (10), a hardenable mass (16) is applied onto the intermediate layer (14).

11. The method according to any of Claims 8 to 10, **characterized in that** the deformation of the leather covering piece (10) is effected **in that** the leather covering piece (10) is stretched over a positive mold (23) prior to the hardening of the mass (16).

12. The method according to any of Claims 8 to 10, **characterized in that** the deformation of the leather covering piece (10) is effected **in that** the leather covering piece (10) is pressed into a negative mold (25) prior to the hardening of the mass (16).

13. A method of producing a vehicle interior lining, in particular a cover of a gas bag module, comprising a leather covering piece (10) produced according to a method according to Claims 8 to 12, comprising the following steps: inserting the leather covering piece (10) into an injection mold (27), providing the inner face of the leather covering piece (10) with an injection-molded backing using a plastic to form a support piece (28), and removal of the vehicle interior lining (26) from the injection mold (27).

## Revendications

1. Garniture de cuir pour un revêtement de l'intérieur d'un véhicule, comportant une pièce de cuir (12) et une couche intermédiaire (14) reliée à la pièce de cuir (12), une masse durcissable (16) étant appliquée sur la couche intermédiaire (14) ou sur la pièce de cuir (12), la garniture de cuir (10) présentant une paroi antérieure (18) et une paroi latérale (20) qui est coudée par rapport à la paroi antérieure (18) et la paroi antérieure et la paroi latérale étant enduite sur la face intérieure au moins partiellement avec la masse durcissable (16), **caractérisée en ce que** après le durcissement, la masse durcissable (16) confère à la garniture de cuir une rigidité propre telle qu'elle conserve une forme courbe, et **en ce que** la paroi latérale (20) présente un bord extérieur (22) libre qui n'est pas enduit avec la masse durcissable (16).

2. Garniture de cuir selon la revendication 1, **caractérisée en ce que** la couche intermédiaire (14) est un non-tissé.

3. Garniture de cuir selon la revendication 1, **caractérisée en ce que** la couche intermédiaire (14) est un tissu.

4. Garniture de cuir selon l'une des revendications précédentes, **caractérisée en ce que** la masse durcissable (16) est une colle.

5. Garniture de cuir selon la revendication 4, **caractérisée en ce que** la colle (16) relie aussi la pièce de cuir (12) à la couche intermédiaire (14).

6. Garniture de cuir selon l'une des revendications précédentes, **caractérisée en ce que** la pièce de cuir (12) est reliée à la couche intermédiaire (14) par une couche de mousse (24).

7. Revêtement intérieur de véhicule, en particulier couvercle pour un module de coussin à gaz, comportant une garniture de cuir (10) selon l'une des revendications précédentes et une partie support (28) reliée à celle-ci, la garniture de cuir (10) étant moulée par injection par l'arrière, et la partie moulée par injection par l'arrière formant la partie support (28).

8. Procédé de fabrication d'une garniture de cuir selon l'une des revendications 1 à 6, qui comprend les étapes suivantes : formation d'une suite de couches formée par la pièce de cuir (12) et la couche intermédiaire (14), déformation à l'aide d'un moule (23, 25), de la garniture de cuir (10) en une forme courbée correspondant en particulier au revêtement de l'intérieur de véhicule (26) et séparation de la garniture de cuir (10) du moule (23, 25), **caractérisé par** les étapes suivantes : enduction de la couche intermédiaire (14) avec une masse durcissable (16), prévision d'un bord extérieur (22) exempt de masse durcissable (16), d'une paroi latérale (20) qui, à l'état déformé de la garniture de cuir (10), s'étend de manière coudée par rapport à une paroi antérieure (18) de la garniture de cuir (10), et durcissement de la masse durcissable (16).

9. Procédé de fabrication d'une garniture de cuir selon l'une des revendications 1 à 6, qui comprend les étapes suivantes : application de la couche intermédiaire (14) sur la pièce de cuir (12), déformation à l'aide d'un moule (23, 25), de la garniture de cuir (10) en une forme courbée correspondant en particulier au revêtement de l'intérieur de véhicule (26) et séparation de la garniture de cuir (10) du moule (23, 25), **caractérisé par** les étapes suivantes : enduction de la pièce de cuir (12) avec une masse durcissable (16), prévision d'un bord extérieur (22) exempt de masse durcissable (16), d'une paroi latérale (20) qui, à l'état déformé de la garniture de cuir (10), s'étend de manière coudée par rapport à une paroi antérieure (18) de la garniture de cuir (10), et durcissement de la masse durcissable (16).

10. Procédé selon la revendication 9, **caractérisé en ce que** avant la déformation de la garniture de cuir (10), une masse durcissable (16) est appliquée sur la couche intermédiaire (14).

11. Procédé selon l'une des revendications 8 à 10, **caractérisé en ce que** la déformation de la garniture de cuir (10) est produite par le fait qu'avant le durcissement de la masse (16), la garniture de cuir (10) est tendue sur un moule positif (23).

12. Procédé selon l'une des revendications 8 à 10, **caractérisé en ce que** la déformation de la garniture de cuir (10) est produite par le fait qu'avant le durcissement de la masse (16), la garniture de cuir (10) est pressée dans un moule négatif (25).

13. Procédé de fabrication d'un revêtement de l'intérieur d'un véhicule, en particulier d'un couvercle d'un module de coussin à gaz, comportant une garniture de cuir (10) fabriquée selon un procédé selon les revendications 8 à 12, présentant les étapes suivantes : Insertion de la garniture de cuir (10) dans un moule de moulage par injection (27), moulage par injection de la face postérieure de la garniture de cuir (10) avec une matière plastique en formant une partie support (28), et retrait du revêtement de l'intérieur du véhicule (26) hors du moule de moulage par injection (27).
